# EUROPÄISCHE PATENTSCHRIFT

(11) **EP 2 500 191 B1**
(45) Veröffentlichungstag und Bekanntmachung des Hinweises auf die Patenterteilung: **17.06.2015**
(21) Anmeldenummer: 12159658.9
(22) Anmeldetag: 15.03.2012
(51) Int. Cl.: B60D 1/64, B60T 17/04

(54) **Kupplungskopf-Anordnung für eine pneumatische und elektrische Verbindung eines Anhängers an ein Zugfahrzeug**
Coupling head assembly for a pneumatic and electrical connection of a trailer to a trailer vehicle
Agencement de tête d'accouplement pour une liaison pneumatique et électrique d'une remorque à un véhicule de traction

(30) Priorität: 17.03.2011 DE 102011014271
(43) Veröffentlichungstag der Anmeldung: 19.09.2012
(73) Patentinhaber: KNORR-BREMSE Systeme für Nutzfahrzeuge GmbH, 80809 München (DE)
(72) Erfinder: Muser, Michael, 85276 Pfaffenhofen (DE); Dali, Istvan, 6000 Kecskemet (HU); Koncz, Laszlo, 6000 Kecskemet (HU)
(74) Vertreter: Mattusch, Gundula

(56) Entgegenhaltungen:
- WO-A1-2006/029753
- WO-A2-2010/118420
- DE-A1- 3 726 822
- DE-A1-102008 054 365
- DE-U1- 29 514 576

## Beschreibung

### Gebiet der Erfindung

Die vorliegende Erfindung betrifft eine Kupplungskopf-Anordnung für eine pneumatische und elektrische Verbindung eines Anhängers an ein Zugfahrzeug, beinhaltend einen pneumatischen Anhänger-Kupplungskopf und einen elektrischen Anhänger-Anschluss, die an dem Fahrzeugchassis des Anhängers montiert sind, einen pneumatischen Zugfahrzeug-Kupplungskopf und einen elektrischen Zugfahrzeug-Anschluss, die an dem Fahrzeugchassis des Zugfahrzeuges montiert sind, so dass diese entgegengesetzt angeordnet sind zu dem besagten pneumatischen Anhänger-Kupplungskopf und dem besagten elektrischen Anhänger-Anschluss, und Befestigungsmittel, die derart auf einer gemeinsamen Befestigungsplatte angeordnet sind, dass die Befestigung des pneumatischen Zugfahrzeug-Kupplungskopfes zusammen mit dem elektrischen Zugfahrzeug-Anschluss an das Fahrzeugchassis des Zugfahrzeugs gegeben ist.

Ein mit einem Zugfahrzeug verbundener Anhänger, ist üblicherweise an dem Zugfahrzeug-Bremssystem angeschlossen, um die Bremsen des Anhängers über den Fahrer des Zugfahrzeuges steuern zu können. Aus diesem Grund ist eine Druckluftleitung zwischen dem Zugfahrzeug und dem Anhänger vorgesehen, um eine pneumatische Verbindung zwischen den beiden Teilsystemen zu gewährleisten. Darüber hinaus braucht die elektrische Ausstattung des Anhängers, im Besonderen die roten Rückleuchten, die Kennzeichenbeleuchtung und andere elektrische Lampen, genauso wie die ABS-Leitungen (wenn vorhanden), mehrere Kabel zwischen dem Anhänger und dem Zugfahrzeug, die den gleichen Zweck erfüllen.

### Hintergrund der Erfindung

Gemäß des allgemein bekannten Standes der Technik verlaufen eine Druckluftverbindung und mehrere elektrische Kabel zwischen dem Zugfahrzeug und dem mechanisch verbundenen Anhänger, mit dem Ziel die lösbare pneumatische und elektrische Verbindung zu gewährleisten.

Aus dem Dokument DE 295 14 576 U1 geht eine Kopplungsanordnung zum automatischen Kuppeln einer Zusatzvorrichtung mit einem Kraftfahrzeug, vorzugsweise einem Geländewagen, hervor. Die Kupplungsanordnung umfasst eine Formschlusseinrichtung zur Herstellung des Formschlusses zwischen der Zusatzvorrichtung und dem Kraftfahrzeug und eine Befestigungseinrichtung zum Befestigen der Zusatzvorrichtung an dem Kraftfahrzeug. Die Formschlusseinrichtung ist selbstzentrierend ausgebildet zur selbsttätigen Herstellung eines Formschlusses durch eine Relativbewegung zwischen der Zusatzvorrichtung und dem Kraftfahrzeug. Die Befestigungseinrichtung ist derart ausgebildet, dass sie in einer Befestigungsstellung die Zusatzvorrichtung mit dem Kraftfahrzeug selbsttätig befestigt. Auf einer Vorderseite der Kupplungsplatte sind drei Kupplungshörner deren äußere Gestaltung identisch zueinander ist, aufgeschraubt. Die Kupplungshörner sind zylindrisch ausgebildete Körper, deren vordere Enden kugelförmig gestaltet sind und eine Eingriffsbohrung aufweisen. Die Eingriffsbohrungen dienen zur Aufnahme von Steckverbindungen für Versorgungsleitungen. Die Verbindungselemente sind als Vaterteile ausgebildete Elektrostecker und Hydraulikstecker. Die Stecker sind schwimmend gelagert und stellen das Gegenstück zu den ebenfalls schwimmend gelagerten, als Mutterteile ausgebildeten Elektrostecker und Hydraulikstecker dar, die in Kupplungshornführungen des Geräteträgers hineinragen. Am jeweiligen Kupplungshorn sind eine Hydraulikleitung für den Hinfluss, eine Hydraulikleitung für den Rückfluss und ein Bündel elektrischer Leitungen angeschlossen. Das Dokument DE19931162A1 offenbart einen Kupplungskopf, um die pneumatische Verbindung zwischen dem Bremssystem der Zugmaschine und dem Anhänger zu realisieren. Um einen unabsichtlichen Austausch zu vermeiden, werden üblicherweise verschiedener Kupplungsköpfe für Zugmaschinen und Anhänger angeboten. Jeder Kupplungskopf beinhaltet mechanisch auslösbare Schließschrauben um die sichere Luftverbindung der Versorgungsleitung zu wahren. Darüber hinaus einen im Kupplungskopf integrierten Filtereinsatz.

Der Kupplungskopf für das Zugfahrzeug ist üblicherweise über eine Verbindung zu einer Spiralverbindung befestigt, wobei die gesamte Verbindung dann am Zugfahrzeug befestigt ist. Um den Zugfahrzeug-Kupplungskopf gegen Verschmutzung zu schützen, wird in der Regel eine Schutzkappe genutzt. Im unangekoppelten Zustand ist der Kupplungskopf auf verschiedene Arten an dem Fahrzeugchassis des Zugfahrzeuges befestigt. Dafür ist ein angemessenes Auflageanordnung von Nöten.

Zusätzlich wird die elektrische Verbindung zwischen Zugfahrzeug und Anhänger durch entsprechende mehrfache Anschlüsse realisiert, die im angekoppelten Zustand mechanisch verriegelt sind, um die elektrische Verbindung an die Selbstablösung zu hindern.

Die derzeitige technische Lösung für die pneumatische und elektrische Verbindung zwischen einem Zugfahrzeug und einem Anhänger benötigt eine große-Anzahl an-Komponenten sowie verschiedene Anschlüsse an dem Zugfahrzeug.

Daher ist es die Aufgabe dieser Erfindung eine Kupplungskopf-Anordnung für eine pneumatische und elektrische Verbindung des Anhängers zum Zugfahrzeug aufzuzeigen, die weniger Einzelteile benötigt und zudem einfacher an das Zugfahrzeug und jeweiligem Anhänger anzubringen ist.

### Kurze Beschreibung der Erfindung

Erfindungsgemäß wird eine Kupplungskopf-Anordnung gemäß dem Merkmalen des Anspruchs 1 vorgeschlagen.

Die Erfindung bietet eine Integrierung der Befestigung und der potentiellen elektrischen Verbindungen an dem Zugfahrzeug-Kupplungskopf zu einer Einheit. Der logistische Aufwand sowie der Installationsaufwand seitens des Zugfahrzeuges wurden bedeutsam gesenkt. Die Herstellungszeit der Zugfahrzeugfertigung wurde ebenfalls gekürzt. Die gemeinsame Befestigungsplatte kann bezüglich der Erfindung allein durch den Zusammenbau des Bauelements erfolgen.

Vorzugsweise besteht die gemeinsame Befestigungsplatte aus ein geeignetes solides Polymer, welches durch Spritzgießen hergestellt wurde. Ein pneumatischer Eingangsanschluss für den pneumatischen Zugfahrzeug-Kupplungskopf ist vorzugsweise direkt an die Rückseite der Befestigungsplatte angeformt. Die Rückseite der vorzugsweise rechteckig geformten Befestigungsplatte ist als jene Seite definiert, die mit dem Fahrzeugchassis in Verbindung kommt. Bezüglich weiteren optionalen Aspekten der Erfindung besitzt die gemeinsame Befestigungsplatte zwei Löcher für entsprechende Schrauben zur abnehmbaren Befestigung der gemeinsamen Befestigungsplatte zusammen mit seinem pneumatischen Zugfahrzeug-Kupplungskopf und dem elektrischen Zugfahrzeug-Anschluss.

Bezüglich eines anderen Aspekts der Erfindung könnte eine gemeinsame Befestigungsplatte zudem eine Kupplungskopfattrappe besitzen, welche den Zugfahrzeug-Kupplungskopf bei Nichtbenutzung trägt. In dieser Konfiguration würden das Distalende - auch zum Zugfahrzeug gerichtetes Ende genannt - der Druckluftleitung, der multiple elektrische Zugfahrzeug-Anschluss und die Kupplungskopfattrappe bevorzugt in einer Linie auf der Vorderseite der gemeinsamen Befestigungsplatte angeordnet werden. Die Vorderseite - auch zum Anhänger gerichtete Seite genannt - ist die entgegengesetzte Seite der Rückseite - auch zum Zugfahrzeug gerichtete Seite genannt - der gemeinsamen Befestigungsplatte.

Bezüglich eines weiteren positiven Aspekts der vorliegenden Erfindung sind die gemeinsame Befestigungsplatte und der elektrische Zugfahrzeug-Anschluss direkt an das Distalende der Druckluftleitung des pneumatischen Zugfahrzeug-Kupplungskopfes angeformt. Dadurch werden keine weiteren Haltevorrichtungen, Schutzkappen oder ähnliche benötigt. Wenn der Anhänger nicht angekoppelt ist, wird der Kupplungskopf auf der Kupplungskopfattrappe fixiert, welcher Teil der Befestigungsplatte ist. Trotz der Integration mehrerer Verbindungen unterschiedlicher Art an der Befestigungsplatte, nämlich pneumatische und elektrische Verbindungen, bietet die Erfindung nur einen Zugfahrzeug-Anschluss, um das Kabelnetz zu reduzieren.

Darüber hinaus ist es empfohlen, den pneumatischen Zugfahrzeug-Kupplungskopf auch direkt an das nah gelegene Ende - auch zum Anhänger gerichtetes Ende genannt - der Druckluftleitung anzuformen, um weiter den Befestigungsaufwand zu verringern. Bevorzugterweise ist die Luftdruckleitung für die pneumatische Verbindung zwischen der Einspeisung der gemeinsamen Befestigungsplatte und dem Zugfahrzeug-Kupplungskopf spiralförmig gewickelt.

Vorangehende und weitere Aspekte der Erfindung werden bei der Verknüpfung der detaillierten Beschreibung mit den beigelegten Zeichnungen ersichtlich werden.

### Kurze Beschreibung der Zeichnungen

- Figur 1: zeigt schematisch die gemeinsame Befestigungsplatte zwischen dem Zugfahrzeug und einem Anhänger im nichtangekoppelten Zustand, und
- Figur 2: zeigt schematisch die gemeinsame Befestigungsplatte zwischen dem Zugfahrzeug und einem Anhänger im angekoppelten Zustand.

### Detaillierte Beschreibung der Zeichnungen

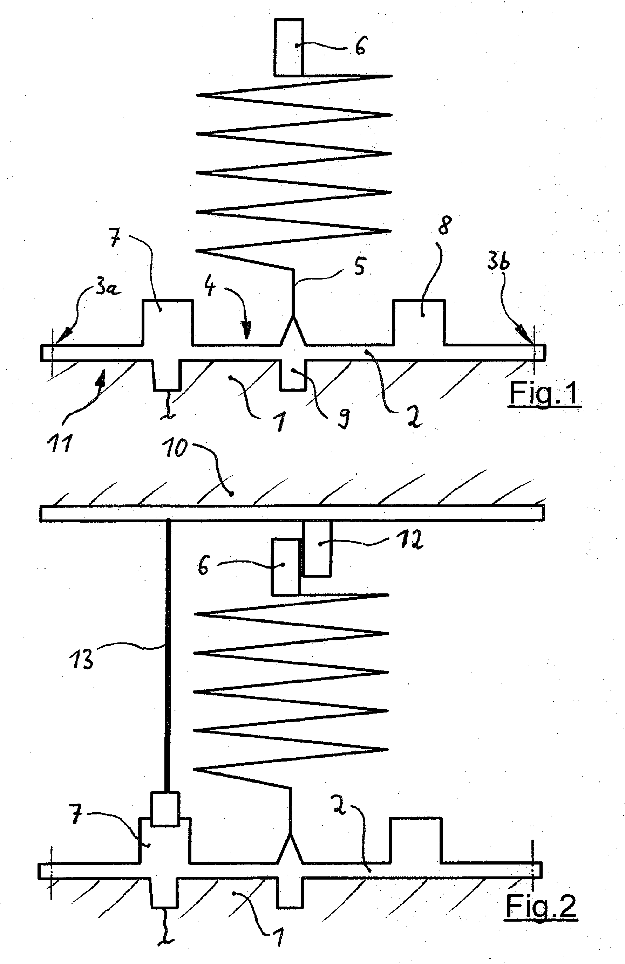

Bezugnehmend auf Figur 1 ist an einem Zugfahrzeug 1 eine Befestigungsplatte 2 wiederabnehmbar befestigt, durch durchgehende Löcher 3a und 3b an den gegenüberliegenden Seiten der Befestigungsplatte 2, wobei die durchgehenden Löcher 3a und 3b, für Schraubelemente die in das Fahrzeugchassis des Anhängers 1 geschraubt werden bestimmt sind.

Das Polymer der Befestigungsplatte 2 ist direkt an das Distalende einer spiralförmig gewickelten Luftdruckleitung 5 angeformt. Ein pneumatischer Zugfahrzeug-Kupplungskopf 6 verbindet das pneumatische Bremssystem des Zugfahrzeuges 1 mit dem Teilsystem des (nicht gezeigtem) Bremssystems des Anhängers.

Angrenzend an die Luftdruckleitung 5 wird ein elektrischer Zugfahrzeug-Anschluss 7 bereitgestellt. Der elektrische Zugfahrzeug-Anschluss 7 ist als Multipol-Anschluss gestaltet, um die elektrischen Kabel zusammenzufassen, welche die Lampen des (nicht gezeigten) Anhängers speisen.

Die gemeinsame Befestigungsplatte 2 beinhaltet eine Kupplungskopfattrappe 8, die ebenfalls direkt an der Vorderseite 4 angeformt ist. Die Kupplungskopfattrappe 8 dient der Befestigung des Zugfahrzeug-Kupplungskopfes 6 im nichtangekoppelten Zustand. Das Distalende der besagten Luftdruckleitung 5, der elektrische multiple Zugfahrzeug-Anschluss 7 und die Kupplungskopfattrappe 8 sind in Linie angeordnet, an der Vorderseite 4 der rechteckig geformten Befestigungsplatte 2.

Ein pneumatischer Eingangsanschluss 9 zur Versorgung des pneumatischen Zugfahrzeug-Kupplungskopf 6 ist an der Rückseite 11 der gemeinsamen Befestigungsplatte angebracht. Der pneumatische Eingangsanschluss 9 ist umgekehrt zum Distalende der Luftdruckleitung 5 angeordnet.

Bezugnehmend auf Figur 2, ist auf dem Fahrzeugchassis des Anhängers 10 ein pneumatischer Anhänger-Kupplungskopf 12 angeordnet, der sich mit dem pneumatischen Zugfahrzeug-Kupplungskopf 6 neben einem pneumatischen Anhänger-Kupplungskopf 12 und einem elektrischen Anhängeranschluss 13, in Form eines elektrischen Multipol-Kabels, befindet. Das Ende des elektrischen Anhänger-Anschlusses 13 ist am elektrischen Zugfahrzeug-Anschluss 7 angekoppelt. Der elektrische Anhänger-Multipol-Anschluss 13 beinhaltet mehrere elektrische Kabel, um die elektrischen Lampen und die elektronischen ABS-Leitungen des Anhängers 10 zu speisen.

Die Erfindung ist nicht auf die oben beschriebene bevorzugte Gestaltung beschränkt, welche nur als Beispiel dient aber auf verschiedene Arten durch die nachfolgenden Patentansprüche modifiziert werden kann, im Besonderen durch die Vermeidung unabsichtlicher Abkopplung der pneumatischen und elektrischen Verbindungen.

### Bezugszeichenliste

- 1: Zugfahrzeug
- 2: Gemeinsame Befestigungsplatte
- 3: Loch
- 4: zum Anhänger gerichtete Seite
- 5: Druckluftverbindung
- 6: Pneumatischer Zugfahrzeug-Kupplungskopf
- 7: Elektrischer Zugfahrzeug-Anschluss
- 8: Kupplungskopfattrappe
- 9: Pneumatischer Eingangsanschluss
- 10: Anhänger
- 11: zum Zugfahrzeug gerichtete Seite
- 12: Pneumatischer Anhänger-Kupplungskopf
- 13: Elektrischer Anhänger-Anschluss

## Patentansprüche

1. Kupplungskopf-Anordnung für eine pneumatische und elektrische Verbindung eines Anhängers (10) an ein Zugfahrzeug (1), welche folgendes beinhaltet:
- einen pneumatischen Anhänger-Kupplungskopf (12) und einen elektrischen Anhänger-Anschluss (13), die an dem Fahrzeugchassis des Anhängers (10) montiert sind,
- einen pneumatischen Zugfahrzeug-Kupplungskopf (6) und einen elektrischen Zugfahrzeug-Anschluss (7), die an dem Fahrzeugchassis des Zugfahrzeuges (1) montiert sind, so dass diese entgegengesetzt angeordnet sind zu dem besagten pneumatischen Anhänger-Kupplungskopf (12) und dem besagten elektrischen Anhänger-Anschluss (13),
- Befestigungsmittel, die derart auf einer gemeinsamen Befestigungsplatte (2) angeordnet sind, dass die Befestigung des pneumatischen Zugfahrzeug-Kupplungskopfes (6) zusammen mit dem elektrischen Zugfahrzeug-Anschluss (7) an das Fahrzeugchassis des Zugfahrzeugs (1) gegeben ist,
**dadurch gekennzeichnet, dass** der pneumatische Zugfahrzeug-Kupplungskopf (6) über eine Druckluftleitung (5) mit der Befestigungsplatte (2) verbunden ist, welche an einer zum Anhänger (10) gerichteten Seite (4) die Aufnahme eines zum Zugfahrzeug (1) gerichteten Endes der Druckluftleitung (5), ebenso wie den zu einem Multipolstecker zusammengefassten elektrischen Zugfahrzeug-Anschluss (7), aufweist.

2. Kupplungskopf-Anordnung nach Anspruch 1,
**dadurch gekennzeichnet, dass** die gemeinsame Befestigungsplatte (2) zusätzlich eine Kupplungskopfattrappe (8) besitzt, die bei Nichtnutzung des Zugfahrzeug-Kupplungskopfes (6) zum Einsatz kommt.

3. Kupplungskopf-Anordnung nach Anspruch 2,
**dadurch gekennzeichnet, dass** das zum Zugfahrzeug (1) gerichtete Ende der Druckluftleitung (5), der elektrische Zugfahrzeug-Anschluss (7) und die Kupplungskopfattrappe (8) in einer Linie auf der zum Anhänger (10) gerichteten Seite (4) der gemeinsamen Befestigungsplatte (2) angeordnet sind.

4. Kupplungskopf-Anordnung nach Anspruch 1,
**dadurch gekennzeichnet, dass** die gemeinsame Befestigungsplatte (2) zwei Löcher (3a, 3b) für entsprechende Schrauben aufweist, zur abnehmbaren Befestigung des pneumatischen Zugfahrzeug-Kupplungskopfes (6) und des elektrischen Zugfahrzeug-Anschluss (7) an den Fahrzeugchassis des Anhängers (10).

5. Kupplungskopf-Anordnung nach Anspruch 1,
**dadurch gekennzeichnet, dass** die gemeinsame Befestigungsplatte (2) aus ein im Spritzguss hergestelltes Polymer besteht.

6. Kupplungskopf-Anordnung nach Anspruch 5,
**dadurch gekennzeichnet, dass** das zum Zugfahrzeug (1) gerichtete Ende der Druckluftleitung (5) und der elektrische Zugfahrzeug-Anschluss (7), direkt an der zum Anhänger (10) gerichteten Seite (4) der gemeinsamen Befestigungsplatte (2) angeformt sind.

7. Kupplungskopf-Anordnung nach Anspruch 1,
**dadurch gekennzeichnet, dass** ein pneumatischer Eingangskanal (9) für die Versorgung des pneumatischen Zugfahrzeug-Kupplungskopfes (6) an der zum Zugfahrzeug (1) gerichteten Seite (11) der gemeinsamen Befestigungsplatte (2), gegenüber des zum Zugfahrzeug (1) gerichteten Endes der Druckleitung (5) angeordnet ist.

8. Kupplungskopf-Anordnung nach Anspruch 1,
**dadurch gekennzeichnet, dass** der pneumatische Zugfahrzeug-Kupplungskopfes (6) direkt an einem zum Anhänger (10) gerichteten Ende der Druckleitung (5) angebracht ist.

9. Kupplungskopf-Anordnung nach Anspruch 8,
**dadurch gekennzeichnet, dass** die Druckleitung (5) für die pneumatische Verbindung des Eingangskanals (9) der gemeinsamen Befestigungsplatte (2) am Zugfahrzeug-Kupplungskopf (12) spiralförmig gestaltet ist.

10. Kupplungskopf-Anordnung nach einem der vorangehenden Ansprüche,
**dadurch gekennzeichnet, dass** die elektrische Anhänger-Multipolverbindung (13) und die elektrische Zugfahrzeug-Multipolverbindung (7) mehrere elektrische Kabel enthalten, um elektrischen Lampen und/oder die elektronischen ABS-Leitungen des Anhängers (10) mit Strom zu versorgen.

## Claims

1. Coupling head assembly for a pneumatic and electric connection between a trailer (10) and a towing vehicle (1), the coupling head assembly comprising:
- a pneumatic trailer coupling head (12) and an electric trailer connection (13), which are mounted on the vehicle chassis of the trailer (10),
- a pneumatic towing vehicle coupling head (6) and an electric towing vehicle connection (7), which are mounted on the vehicle chassis of the towing vehicle (1), these being arranged opposite the said pneumatic trailer coupling head (12) and the said electric trailer connection (13),
- fastening means which are arranged on a common mounting plate (2) in such a way that the pneumatic towing vehicle coupling head (6), together with the electric towing vehicle connection (7), is secured to the vehicle chassis of the towing vehicle (1),
**characterised in that** the pneumatic towing vehicle coupling head (6) is connected via a pneumatic line (5) to the mounting plate (2), which comprises, on a side (4) directed towards the trailer (10), the receptacle for an end of the pneumatic line (5) directed towards the towing vehicle (1), as well as the electric towing vehicle connection (7), which is combined into a multi-pin plug.

2. Coupling head assembly according to claim 1,
**characterised in that** the common mounting plate (2) additionally comprises a coupling head dummy (8), which is used when the towing vehicle coupling head (6) is not in use.

3. Coupling head assembly according to claim 2,
**characterised in that** the end of the pneumatic line (5) directed towards the towing vehicle (1), the electric towing vehicle connection (7) and the coupling head dummy (8) are arranged in a line on the side (4) of the common mounting plate (2) which is directed towards the trailer (10).

4. Coupling head assembly according to claim 1,
**characterised in that** the common mounting plate (2) has two holes (3a, 3b) for suitable screws for detachably securing the pneumatic towing vehicle coupling head (6) and the electric towing vehicle connection (7) to the vehicle chassis of the trailer (10).

5. Coupling head assembly according to claim 1,
**characterised in that** the common mounting plate (2) is made of an injection-moulded polymer.

6. Coupling head assembly according to claim 5,
**characterised in that** the end of the pneumatic line (5) directed towards the towing vehicle (1) and the electric towing vehicle connection (7) are directly moulded on the side (4) of the common mounting plate (2) which is directed towards the trailer (10).

7. Coupling head assembly according to claim 1,
**characterised in that** a pneumatic inlet passage (9) for the supply of the pneumatic towing vehicle coupling head (6) is located on the side (11) of the common mounting plate (2) which is directed towards the towing vehicle (1), opposite the end of the pneumatic line (5) directed towards the towing vehicle (1).

8. Coupling head assembly according to claim 1,
**characterised in that** the pneumatic towing vehicle coupling head (6) is mounted directly on an end of the pneumatic line (5) directed towards the trailer (10).

9. Coupling head assembly according to claim 8,
**characterised in that** the pneumatic line (5) for the pneumatic connection of the inlet passage (9) of the common mounting plate (2) to the towing vehicle coupling head (12) is helical.

10. Coupling head assembly according to any of the preceding claims,
**characterised in that** the electric multi-pin trailer connection (13) and the electric multi-pin towing vehicle connection (7) comprise a plurality of electric cables for supplying electric lights and/or the electronic ABS lines of the trailer (10) with power.

## Revendications

1. Agencement de tête d'attelage pour une liaison pneumatique et électrique d'une remorque (10) à un véhicule de traction (1), qui comporte ce qui suit :
- une tête (12) pneumatique d'attelage de remorque et une borne (13) électrique de remorque, qui sont montées sur le châssis de véhicule de la remorque (10),
- une tête (6) pneumatique d'attelage de véhicule de traction et une borne (7) électrique de véhicule de traction, qui sont montées sur le châssis du véhicule (1) de traction, de manière à être montées en opposition à la tête (12) pneumatique d'attelage de remorque et à la borne (13) électrique de remorque,
- des moyens de fixation, qui sont montés sur une plaque (2) commune de fixation, de manière à obtenir la fixation de la tête (6) pneumatique d'attelage de véhicule de traction ensemble avec la borne (7) électrique de véhicule de traction au châssis du véhicule (1) de traction,
**caractérisé en ce que** la tête (6) pneumatique d'attelage de véhicule de traction est reliée à la plaque (2) de fixation par un conduit (5) d'air comprimé, qui a, d'un côté (4), tourné vers la remorque (10), le logement d'une extrémité, tournée vers le véhicule (1) de traction, du conduit (5) pour de l'air comprimé, tout comme la borne (7) électrique de véhicule de traction rassemblée en un connecteur multipolaire.

2. Agencement de tête d'attelage suivant la revendication 1, **caractérisé en ce que** la plaque (2) commune de fixation possède, en outre, un simulacre (8) de tête d'attelage, qui est utilisé lorsque la tête (6) d'accouplement de véhicule de traction n'est pas utilisée.

3. Agencement de tête d'attelage suivant la revendication 2, **caractérisé en ce que** l'extrémité, tournée vers le véhicule (1) de traction, du conduit (5) pour de l'air comprimé, la borne (7) électrique du véhicule de traction et le simulacre (8) de tête d'attelage sont disposés suivant une ligne du côté (4), tourné vers la remorque (10), de la plaque (2) commune de fixation.

4. Agencement de tête d'attelage suivant la revendication 1, **caractérisé en ce que** la plaque (2) commune de fixation a deux trous (3a, 3b) pour des vis correspondantes pour fixer, avec possibilité de les retirer, la tête (6) pneumatique d'accouplement de véhicule de traction et la borne (7) électrique de véhicule de traction au châssis de véhicule de la remorque (10).

5. Agencement de tête d'attelage suivant la revendication 1, **caractérisé en ce que** la plaque (2) commune de fixation est en un polymère fabriqué en moulage par injection.

6. Agencement de tête d'attelage suivant la revendication 5, **caractérisé en ce que** l'extrémité, tournée vers le véhicule (1) de traction, du conduit (5) pour de l'air comprimé et la borne (7) électrique de véhicule de traction sont formées directement du côté (4), tourné vers la remorque, de la plaque (2) commune de fixation.

7. Agencement de tête d'attelage suivant la revendication 1, **caractérisé en ce qu'**un canal (9) pneumatique d'entrée pour l'alimentation de la tête (6) pneumatique d'attelage de véhicule de traction est disposé du côté, tourné vers le véhicule (1) de traction, de la plaque (2) commune de fixation en face de l'extrémité, tournée vers le véhicule (1) de traction, du conduit (5) pour de l'air comprimé.

8. Agencement de tête d'attelage suivant la revendication 1, **caractérisé en ce que** la tête (6) pneumatique d'attelage de véhicule de traction est mise directement sur une extrémité, tournée vers la remorque (10), du conduit (5) pour de l'air comprimé.

9. Agencement de tête d'attelage suivant la revendication 8, **caractérisé en ce que** le conduit (5) pour de l'air comprimé est conformé en spirale pour la liaison pneumatique du canal (9) d'entrée de la plaque (2) commune de fixation à la tête (12) d'attelage de véhicule de traction.

10. Agencement de tête d'attelage suivant l'une des revendications précédentes,
**caractérisé en ce que** la liaison (13) multipolaire électrique de remorque et la liaison (7) multipolaire électrique de véhicule de traction comportent plusieurs câbles électriques pour alimenter en courant des lampes électriques et/ou des lignes électroniques ABS de la remorque (10).
